# EUROPEAN PATENT SPECIFICATION

(11) **EP 2 497 357 B1**
(45) Date of publication and mention of the grant of the patent: **16.11.2016**
(21) Application number: 12158919.6
(22) Date of filing: 09.03.2012
(51) Int. Cl.: A01K 1/06

(54) **Livestock conveyor**
Viehzuchtförderanlage
Transport de bétail

(30) Priority: 11.03.2011 GB 201104146
(43) Date of publication of application: 12.09.2012
(73) Proprietor: McGillivray, David James, Linlithgow, West Lothian EH49 7AW (GB)
(72) Inventor: McGillivray, David James, Linlithgow, West Lothian EH49 7AW (GB)
(74) Representative: Hanson, William Bennett

(56) References cited:
- WO-A1-98/24323
- WO-A1-2007/112487
- GB-A- 2 245 535
- US-A- 5 070 818
- US-B1- 6 213 058

## Description

### Background to the Invention

This invention relates to an animal processing apparatus.

Various actions required to be carried out on a livestock animal such as a sheep require the animal to be immobilised for a period of time. Examples of such actions include crutching, drenching, inspection, ear tagging and foot trimming.

A known sheep conveyor includes two conveyor belts arranged in a V-shape so as to convey a sheep and immobilise it so that such actions can be performed by an operator. WO 98/24323 A1 discloses a processing apparatus according to the preamble of claim 1.

### Summary of the Invention

It is an aim of the invention to provide an animal processing apparatus having improved functionality with respect to the known conveyor.

Accordingly, the present invention provides an animal processing apparatus, according to claim 1.

The information capture means may also comprise scales for weighing the animal. The scales may in particular comprise means for determining the combined weight of the animal and at least part of the apparatus, and means for subtracting the weight of said at least part of the apparatus to determine the weight of the animal. A display may be provided for displaying the weight of the animal.

The interrogating means are arranged to interrogate a radiofrequency identity tag or bar code. Two interrogating means are provided, one on each side of a position to be occupied by the animal, to allow for attachment of the identity tag to either ear of the animal.

In an embodiment of the invention, the processing conveyor is arranged to operate continuously, the information capture being arranged to operate whilst the animal is moving therethrough.

The apparatus may be provided with a remote controller for activating a drive of the conveyor remotely. The apparatus may include a feed conveyor for conveying animals to the processing conveyor. The feed conveyor may be arranged to be driven by the processing conveyor or may have a separate drive.

### Brief Description of the Drawings

The invention will now be described in more detail, by way of example only, with reference to the accompanying drawings, in which:
Figure 1 is a perspective view of a processing conveyor according to an embodiment of the invention; and
Figure 2 shows an animal processing apparatus incorporating the processing conveyor of Figure 1.

### Detailed Description of Particular Embodiments

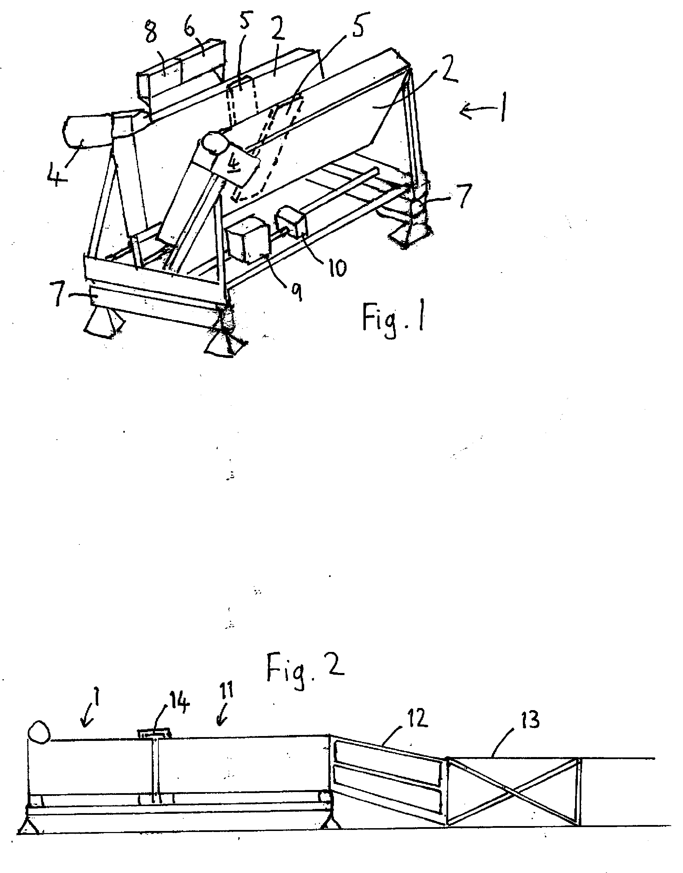

Figure 1 shows a processing sheep conveyor 1. The conveyor itself comprises two conveyor belts 2, arranged in a V-shaped frame of adjustable width, supported by vertical bars. Each conveyor belt 2 is driven by rollers such as 3, an end roller in each case being driven by a motor 4. This V-shaped conveyor arrangement is known per se.

The processing conveyor has two EID (electronic identification) panels 5, one mounted behind each conveyor belt 2 at the top thereof. The EID panels are able to interrogate an RFID (radiofrequency identification) tag attached to an ear of a sheep passing through the conveyor. The presence of the two EID panels 5 ensures that the RFID tag is read regardless of whether it is attached to the left or right ear. An EID control box 6 is provided for controlling the EID function of the apparatus.

Weigh bars 7 are mounted below the V-shaped conveyors. The bars use strain gauges to ascertain the combined weight of the sheep and the part of the apparatus above the weigh bars. The known weight of the apparatus part is then subtracted from the combined weight to give the weight of the animal. The weight information is displayed at a weigh head 8. Additionally, the weight information is associated with the EID information for the particular animal and stored in an electronic memory, thus providing a register of the sheep that have been weighed and their respective weights.

Due to the instantaneous capture of information, namely the EID information and the weight, it is possible to operate the conveyor continuously, obtaining the information from each animal whilst it moves through the conveyor.

The motors 4 are powered by an inverter 9 which is under the control of a remote control box 10. This allows the conveyor to be started and stopped, and switched between forward and reverse modes, remotely.

Figure 2 shows an animal processing apparatus incorporating the processing conveyor 1. A feed conveyor 11 leads from a ramp 12 and a sheep pen 13 to the processing conveyor. The feed conveyor 11 is also a V-shaped conveyor. It may have its own drive motors, or as shown a chain 14 or a belt can link rearmost rollers of the processing conveyor 1 with respective foremost rollers of the feed conveyor 11 so that the latter is driven by the processing conveyor 1.

The invention obviates the need for a hand held EID unit or other separate EID system. It also obviates the need for a separate weighing scale. It gives the user control of the speed of the animal passing the EID antenna. If required, the animal can be immobilised in order for other operations to be performed simultaneously with weighing and EID. The conveyor is compact because of the incorporation of the EID system and scales into the conveyor. Animals are placed under reduced stress.

Modifications can be made to the apparatus specifically described above without departing from the scope of the invention as set out in the appended claims. Firstly, whilst a sheep conveyor has been described, the apparatus could be adapted for use with cattle, pigs or goats.

As an alternative to the horizontal conveyors 1, 11 shown in Figure 2, the conveyors could be mounted in an inclined configuration directly from a pen.

Instead of the feed conveyor 11, a simple ramp could be used to permit animals to enter the processing conveyor 1. To render the apparatus transportable, jockey wheels could be mounted at its corners.

Instead of computerised recordal of EID information and associated animal weights, the information could be collated manually.

An auto-drafter can be installed at the exit of the processing conveyor for automatically separating the sheep or other livestock into different pens, e.g. based on their weight, for further operations.

## Claims

1. An animal processing apparatus including a processing conveyor (1) for conveying an animal therealong, the conveyor including two conveyor belts (2), one on each side of a position to be occupied by an animal, and an information capture means (5) provided on the conveyor, **characterized in that** the information capture means comprises two interrogating means (5), one within each of said conveyor belts (2), for interrogating an identity tag on the animal.

2. An apparatus according to claim 1, including scales (7, 8) for weighing the animal.

3. An apparatus according to claim 2, wherein the scales (7, 8) include means for determining the combined weight of the animal and at least part of the apparatus, and means for subtracting the weight of said at least part of the apparatus to determine the weight of the animal.

4. An apparatus according to claim 2 or 3, including a display (8) for displaying the weight of the animal.

5. An apparatus according to claim 2, 3, or 4, including electronic processing means for recording identities of animals and their respective weights.

6. An apparatus according to any preceding claim, wherein the processing conveyor (1) is arranged to operate continuously, the information capture means (5) being arranged to operate whilst the animal is moving therethrough.

7. An apparatus according to any preceding claim, provided with a remote controller for activating a drive (9, 10) of the conveyor remotely.

8. An apparatus according to any preceding claim, including a feed conveyor (11) for conveying animals to the processing conveyor.

9. An apparatus according to claim 8, wherein the feed conveyor (11) is arranged to be driven by the processing conveyor (1).

## Patentansprüche

1. Tierverarbeitungsvorrichtung mit einem Verarbeitungsförderer (1) zur Beförderung eines Tiers, wobei der Förderer zwei Förderbänder (2), nämlich eines auf jeder Seite einer vom Tier einzunehmenden Position, sowie eine auf dem Förderer vorgesehene Informationsaufnahmeeinrichtung (5) enthält, **dadurch gekennzeichnet, dass** die Informationsaufnahmeeinrichtung zwei Abfrageeinrichtungen (5), nämlich je eine innerhalb jedes der Förderbänder (2), zum Abfragen einer Identitätskennzeichnung am Tier umfasst.

2. Vorrichtung nach Anspruch 1 mit einer Waage (7, 8) zum Wiegen des Tiers.

3. Vorrichtung nach Anspruch 2, wobei die Waage (7, 8) eine Einrichtung zum Bestimmen des vereinigten Gewichts des Tiers und mindestens eines Teils der Vorrichtung sowie eine Einrichtung zum Subtrahieren des Gewichts des mindestens einen Teils der Vorrichtung enthält, um das Gewicht des Tiers zu bestimmen.

4. Vorrichtung nach Anspruch 2 oder 3 mit einer Anzeige (8) zum Anzeigen des Gewichts des Tiers.

5. Vorrichtung nach Anspruch 2, 3 oder 4 mit einer elektronischen Verarbeitungseinrichtung zum Aufzeichnen von Identitäten von Tieren und deren jeweiliger Gewichte.

6. Vorrichtung nach einem der vorhergehenden Ansprüche, wobei der Verarbeitungsförderer (1) zum kontinuierlichen Betrieb eingerichtet ist und die Informationsaufnahmeeinrichtung (5) zum Betrieb eingerichtet ist, während sich das Tier hindurchbewegt.

7. Vorrichtung nach einem der vorhergehenden Ansprüche mit einer Fernsteuerung zum Aktivieren eines Antriebs (9, 10) des Förderers von Ferne.

8. Vorrichtung nach einem der vorhergehenden Ansprüche mit einem Zuführförderer (11) zum Fördern von Tieren zum Verarbeitungsförderer.

9. Vorrichtung nach Anspruch 8, wobei der Zuführförderer (11) eingerichtet ist, vom Verarbeitungsförderer (1) angetrieben zu werden.

## Revendications

1. Appareil de traitement d'animaux comprenant un convoyeur de traitement (1) pour transporter un animal le long de celui-ci, le convoyeur comprenant deux bandes transporteuses (2), chacune de part et d'autre d'une position devant être occupée par un animal et des moyens d'acquisition d'informations (5) prévus sur le convoyeur, **caractérisé en ce que** les moyens d'acquisition d'informations comprennent deux moyens d'interrogation (5), un à l'intérieur de chacune desdites bandes transporteuses (2), afin d'interroger une étiquette d'identité sur l'animal.

2. Appareil selon la revendication 1, comprenant une balance (7, 8) pour peser l'animal.

3. Appareil selon la revendication 2, dans lequel la balance (7, 8) comprend des moyens pour déterminer le poids combiné de l'animal et d'au moins une partie de l'appareil ainsi que des moyens pour soustraire le poids de ladite au moins une partie de l'appareil afin de déterminer le poids de l'animal.

4. Appareil selon la revendication 2 ou 3, comprenant un affichage (8) pour afficher le poids de l'animal.

5. Appareil selon la revendication 2, 3 ou 4 comprenant des moyens de traitement électroniques pour enregistrer les identités des animaux et leur poids respectif.

6. Appareil selon l'une quelconque des revendications précédentes, dans lequel le convoyeur de traitement (1) est agencé pour fonctionner en continu, les moyens d'acquisition d'informations (5) étant agencés pour fonctionner en même temps que l'animal se déplace à l'intérieur de ceux-ci.

7. Appareil selon l'une quelconque des revendications précédentes, muni d'une télécommande pour actionner à distance le système d'entraînement (9, 10) du convoyeur.

8. Appareil selon l'une quelconque des revendications précédentes, comprenant un convoyeur d'acheminement (11) pour acheminer les animaux jusqu'au convoyeur de traitement.

9. Appareil selon la revendication 8, dans lequel le convoyeur d'acheminement (11) est agencé pour être actionné par le convoyeur de traitement (1).
